# FASCICULE DE BREVET EUROPEEN

(11) **EP 3 312 737 B1**
(45) Date de publication et mention de la délivrance du brevet: **21.08.2024**
(21) Numéro de dépôt: 16306367.0
(22) Date de dépôt: 18.10.2016
(51) Int. Cl.: G06F 16/13

(54) **MÉTHODE POUR TRANSFÉRER DES FICHIERS INFORMATIQUES**
METHODE ZUM ÜBERTRAGEN VON COMPUTERDATEIEN
METHOD FOR TRANSFERRING COMPUTER FILES

(43) Date de publication de la demande: 25.04.2018
(73) Titulaire: CACEIS Bank, 92120 Montrouge (FR)
(72) Inventeur: Guénée, Thibault, 75013 PARIS (FR)
(74) Mandataire: Gevers Patents

(56) Documents cités:
- WO-A1-2014/090411
- PROJET DEBIAN: "Dépôt APT avec restrictions d'accès", ARCHITECTURE LOGICIELLE, 1 October 2016 (2016-10-01)
- DAVE HALL: "Howto Setup a Private Package Repository with reprepro and nginx | Dave Hall Consulting", 20 November 2015 (2015-11-20), XP055359727, Retrieved from the Internet <URL:http://davehall.com.au/blog/dave/2010/02/06/howto-setup-private-package-repository-reprepro-nginx> [retrieved on 20170328]
- ALEXX: "Restrict Access To Your Private Debian Repository", 23 March 2007 (2007-03-23), XP055359729, Retrieved from the Internet <URL:https://debian-administration.org/article/513/Restrict_Access_To_Your_Private_Debian_Repository> [retrieved on 20170328]

## Description

### Domaine technique

La présente invention concerne une méthode, un programme informatique et un serveur informatique pour transférer des fichiers informatiques.

### Art antérieur

Il arrive que des premières entités détiennent des fichiers informatiques et désirent en transférer, sous certaines conditions, à des deuxièmes entités. La solution actuelle est qu'un employé d'une des premières entités contacte des deuxièmes entités pour voir si elles désirent certains fichiers informatiques.

Il arrive aussi que des deuxièmes entités désirent un certain fichier détenu par une des premières entités sans savoir laquelle des premières entités détient ce fichier. La solution actuelle est qu'un employé d'une des deuxièmes entités contacte chacune des premières entités pour voir si elle détient ledit fichier.

Dans ces deux situations, le fichier informatique est finalement échangé par email entre un employé de la première entité et un employé de la deuxième entité.

Ce processus est long, lourd, peu pratique, manque de transparence et sujet à de nombreuses erreurs. En outre, chez chacune des deuxièmes entités, les fichiers sont répartis parmi les employés. Par conséquent, lorsqu'un traitement informatique de données de nombreux fichiers est nécessaire, il faut vérifier que tous les fichiers sont chez au moins un des employés, puis aller les chercher un par un. Ensuite, il faut vérifier que les données requises sont présentes au bon endroit du fichier afin que le logiciel de traitement informatique puisse les traiter automatiquement.

Un autre désavantage du processus actuel est qu'il présente plusieurs problèmes de sécurité qui sont particulièrement dommageables si le fichier informatique contient des informations confidentielles et/ou sensibles. D'abord, un accord de confidentialité doit être signé pour chaque fichier échangé, ce qui prend du temps et des ressources. Ensuite, il n'y a pas nécessairement de connexion sécurisée lors du transfert du fichier. De plus, il est difficile de contrôler qui reçoit le fichier et donc qui a accès aux informations confidentielles, ou de contrôler qui envoie le fichier et donc qui peut être la source de fuites de données sensibles.

Le processus actuel présente aussi un grand risque d'erreur humaine puisque les employés peuvent se tromper de fichier à envoyer. Les emails peuvent en outre se perdre, être bloqués erronément par un système de sécurité ou être bloqués si le fichier joint est trop gros. Dans le processus actuel, les fichiers doivent tous être stockés dans une mémoire d'un dispositif informatique des deuxièmes entités.

WO 2014/090411 A1 décrit une méthode sécurisée permettant d'accéder à des données médicales confidentielles.

### Résumé de l'invention

Selon un premier aspect, l'invention propose une méthode mise en oeuvre par ordinateurs plus rapide, plus sécurisé et plus automatisable qu'un transfert de fichiers informatiques par email. A cet effet, l'invention propose une méthode de transfert de fichiers informatiques comprenant les étapes suivantes:
(a) hébergement sur un serveur d'un site internet prévu pour aider au transfert de fichiers informatiques,
(b) création, à l'aide d'un dispositif informatique expéditeur, d'un compte d'expéditeur sur ledit site internet, qui entraine une création d'une page publique de compte d'expéditeur et une création d'une page privée de compte d'expéditeur sur ledit site internet,
(c) création, à l'aide d'un dispositif informatique destinataire, d'un compte de destinataire sur ledit site internet, qui entraine une création d'une page publique de compte de destinataire et une création d'une page privée de compte de destinataire sur ledit site internet,
(d) téléchargement d'un fichier vers le serveur à partir du dispositif informatique expéditeur,
(e) affichage, sur la page publique du compte d'expéditeur d'une information caractéristique dudit fichier,
(f) envoi au serveur, par le dispositif informatique destinataire, d'une requête de demande d'accès audit fichier,
(g) envoi au dispositif informatique expéditeur, par le serveur, d'une information concernant la requête de demande d'accès audit fichier permettant au dispositif informatique expéditeur d'identifier le fichier et le dispositif informatique destinataire,
(h) envoi au serveur, par le dispositif informatique expéditeur, d'un accord sur ladite requête, et
(i) modification, par le serveur, d'une caractéristique dudit fichier et/ou dudit compte de destinataire pour autoriser le dispositif informatique destinataire à télécharger ledit fichier à partir du serveur.

Les étapes de la méthode selon l'invention sont préférentiellement réalisées dans l'ordre présenté ci-dessus.

Suite à l'autorisation au dispositif informatique destinataire de télécharger le fichier du serveur, le dispositif informatique destinataire peut effectuer ce téléchargement. Préférentiellement, le dispositif informatique destinataire peut télécharger le fichier autant de fois qu'il le désire. De préférence, à chaque mise à jour d'un fichier, la version mise à jour remplace la version précédente, de façon à ce que le dispositif informatique destinataire ait toujours accès à la version à jour du fichier. Les versions précédentes du fichier sont toujours téléchargeables le serveur par le dispositif informatique destinataire. Elles apparaissent préférentiellement dans un historique.

Dans la méthode selon l'invention, toute première entité peut créer un compte d'expéditeur et toute deuxième entité peut créer un compte de destinataire. Les pages publiques permettent que se crée un réseau d'entités désirant envoyer ou recevoir des fichiers. Préférentiellement, tous les fichiers disponibles sur le serveur apparaissent sur une des pages publiques. Il est donc très facile et rapide pour un employé d'une première entité de faire savoir aux deuxièmes entités quels fichiers il peut partager, par affichage sur sa page publique. Il est aussi très facile et rapide pour un employé d'une deuxième entité de trouver le fichier qu'il cherche, en vérifiant les pages publiques des comptes d'expéditeur.

Les premières entités, utilisant les dispositifs informatiques expéditeurs, contrôlent l'accès qu'elles donnent à leurs fichiers, fichier par fichier. Si un mauvais fichier est téléchargé vers le serveur, cela sera détecté au moment où le dispositif informatique expéditeur recevra la requête de demande d'accès au fichier. Si un fichier se perd ou est bloqué, cela se verra et le problème pourra être immédiatement résolu.

Le site internet utilise préférentiellement une connexion sécurisée, de type https, ce qui est facile à mettre en place et garantit la confidentialité et l'intégrité des fichiers envoyés vers le serveur ou depuis le serveur.

Un autre avantage de l'invention est que le téléchargement du fichier vers le serveur à partir du dispositif informatique expéditeur peut être contrôlé par un logiciel tournant sur le dispositif informatique expéditeur. Par exemple, la première entité peut utiliser un logiciel agissant de façon telle que tous les jours à minuit, les fichiers répondant à un critère donné, et qui ne sont pas encore sur le serveur, sont téléchargés vers le serveur. Cela permet de minimiser les transferts par réseau durant les heures de travail.

Un autre avantage de l'invention est que le téléchargement du fichier depuis le serveur vers le dispositif informatique destinataire peut être contrôlé par un logiciel tournant sur le dispositif informatique destinataire. Par exemple, la deuxième entité peut utiliser un logiciel agissant de façon telle que tous les jours à minuit, les fichiers répondant à un critère donné sont téléchargés depuis le serveur. Cela permet de minimiser les transferts par réseau durant les heures de travail. Un autre exemple est qu'un logiciel de traitement de données tournant sur le dispositif informatique destinataire peut télécharger lui-même les fichiers dont il a besoin et aller chercher les données dont il a besoin dans ces fichiers. L'invention permet donc une grande automatisation.

Un autre avantage de l'invention est qu'il n'est pas nécessaire pour le dispositif informatique destinataire de stocker les fichiers auxquels il a accès. Il peut en télécharger la version à jour à tout moment. Par exemple, un téléchargement d'un fichier peut être automatiquement déclenché par un logiciel tournant sur le dispositif informatique destinataire chaque fois que ledit fichier est mis à jour sur base de l'information caractéristique dudit fichier si elle comprend un numéro de version du ficher ou une date de mise à jour, ou sur base d'un message indiquant une mise à jour du fichier envoyé par le serveur au dispositif informatique destinataire.

Un autre avantage de l'invention est qu'il n'y a pas d'échange direct entre le dispositif informatique expéditeur et le dispositif informatique destinataire. Cela permet de garantir l'anonymat des employés des première et deuxième entités. Cela permet aussi d'éviter la propagation de virus par email.

Préférentiellement, le site internet comprend un moyen de recherche permettant de réaliser des recherches afin de trouver un compte d'expéditeur, un compte de destinataire et/ou un fichier. Par exemple, une recherche avec l'information caractéristique du fichier amène directement à la page publique du compte d'expéditeur proposant ce fichier.

Préférentiellement, un compte peut comprendre plusieurs sous-comptes, chaque sous-compte étant prévu pour correspondre à une personne physique, et ayant un mot de passe différent. Ainsi, il est possible de vérifier quel employé envoie ou reçoit quel fichier ou entreprend quelle action.

Le serveur peut comprendre une pluralité d'ordinateurs. Le serveur comprend préférentiellement une base de données adéquate pour la gestion des fichiers. Le dispositif informatique expéditeur peut comprendre une pluralité d'ordinateurs. Le dispositif informatique expéditeur peut être appelé « premier dispositif informatique ». Le dispositif informatique destinataire peut comprendre une pluralité d'ordinateurs. Le dispositif informatique destinataire peut être appelé « deuxième dispositif informatique ».

Le site internet peut aussi être appelé plateforme informatique ou plateforme informatique collaborative.

La méthode selon l'invention comprend préférentiellement une fourniture du serveur.

De préférence, lors de la création du compte d'expéditeur, le serveur attribue audit compte des caractéristiques. Par exemple, il lui attribue la caractéristique "expéditeur", qui fait qu'il peut télécharger des fichiers vers le serveur.

De préférence, lors de la création du compte de destinataire, le serveur attribue audit compte des caractéristiques. Par exemple, il lui attribue la caractéristique "destinataire", qui fait qu'il peut télécharger des fichiers depuis le serveur.

Dans le cadre du présent document, un "compte", qui peut aussi être dénommé "profil" est un ensemble d'informations lié à une entité, par exemple une société ou une personne physique. Le compte comprend préférentiellement un identifiant et préférentiellement un mot de passe. Tout dispositif informatique expéditeur correspond à un compte d'expéditeur car il est identifié sur le site internet par ledit compte d'expéditeur. Tout dispositif informatique destinataire correspond à un compte de destinataire car il est identifié sur le site internet par ledit compte de destinataire.

Dans le cadre du présent document, une "page" est une page de site internet, aussi appelée page web.

Un téléchargement vers le serveur peut être traduit en anglais par upload. Un téléchargement depuis le serveur peut être traduit en anglais par download.

Le fichier a préférentiellement un nom et un contenu. En outre, de préférence, une fois qu'il est sur le serveur, celui-ci lui attribue des caractéristiques liées par exemple au dispositif informatique expéditeur qui l'a téléchargé, au moment (date et heure) où il a été téléchargé, aux dispositifs informatiques destinataires qui ont le droit de le téléchargé, aux dispositifs informatiques destinataires qui l'ont déjà téléchargé etc.

Préférentiellement, le fichier comprend des éléments ou des champs qui sont organisés selon une norme prédéterminée ou selon un standard prédéterminé, par exemple une des versions du standard Tripartite Template appelé TPT (le standard TPT v3.0 ou ultérieure) pour la réglementation Solvabilité II ou une des versions du standard European PRIIPs Template appelé EPT pour la réglementation PRIIPs.

L'information caractéristique dudit fichier est de préférence une information permettant facilement au dispositif informatique utilisateur de déterminer s'il est intéressé par ledit fichier.

L'envoi au dispositif informatique expéditeur, par le serveur, d'une information concernant la requête de demande d'accès audit fichier peut se faire par un email indiquant que tel dispositif informatique destinataire a envoyé une requête concernant tel fichier.

Selon un mode de réalisation de l'invention, le téléchargement d'un fichier vers le serveur est suivi d'une vérification de format du fichier et/ou d'une vérification de format d'au moins un élément du fichier. Cela permet de vérifier que les fichiers pourront être utilisés facilement et directement dans des logiciels du dispositif informatique destinataire, par exemple pour des calculs. Si le format n'est pas le format attendu, le serveur peut par exemple envoyer au dispositif informatique expéditeur un message contenant des indications sur le champ dont le format n'a pas satisfait à la vérification et/ou sur le format attendu. Cela peut être utile par exemple si les fichiers sont des images qui doivent avoir un certain format pour être traitées automatiquement par le dispositif informatique destinataire.

Selon un mode de réalisation de l'invention, la page privée du compte d'expéditeur indique les fichiers téléchargés vers le serveur par le dispositif informatique expéditeur. Cela permet au dispositif informatique expéditeur de fournir une bonne vue des fichiers. Un logiciel tournant sur le dispositif informatique expéditeur ou un utilisateur du dispositif informatique expéditeur peut ainsi contrôler rapidement les fichiers mis à disposition. Cette caractéristique de l'invention apporte de la transparence et de la sécurité.

Selon un mode de réalisation de l'invention, la page privée du compte d'expéditeur indique, en relation avec les fichiers, les comptes de destinataires qui ont l'autorisation de télécharger lesdits fichiers depuis le serveur, et le serveur met automatiquement cette information à jour suite à l'étape (i). L'indication peut se faire par les identifiants correspondant aux comptes de destinataires. Cela permet au dispositif informatique expéditeur de fournir une bonne vue des fichiers et quels comptes destinataires y ont accès. Un logiciel tournant sur le dispositif informatique expéditeur ou un utilisateur du dispositif informatique expéditeur peut ainsi contrôler rapidement les fichiers mis à disposition et qui peut en disposer. Cette caractéristique de l'invention apporte de la transparence et de la sécurité.

Selon un mode de réalisation de l'invention, la page privée du compte d'expéditeur indique, en relation avec les fichiers, le nombre de comptes de destinataires qui ont l'autorisation de télécharger lesdits fichiers depuis le serveur, et le serveur met automatiquement cette information à jour suite à l'étape (i). Cela permet au dispositif informatique expéditeur de fournir une bonne vue des fichiers et de leur succès auprès des destinataires.

Selon un mode de réalisation de l'invention, la page privée du compte de destinataire indique les fichiers que ledit compte de destinataire a l'autorisation de télécharger depuis le serveur. Par exemple, cela peut être réalisé par un affichage de l'information caractéristique de chaque fichier. Cela permet au dispositif informatique destinataire de fournir une bonne vue des fichiers auxquels il a accès. Un logiciel tournant sur le dispositif informatique destinataire ou un utilisateur du dispositif informatique destinataire peut ainsi contrôler rapidement les fichiers auxquels il a accès. Cela lui permet d'aller les chercher tous d'un coup dans leur dernière version et de vérifier ceux qui manquent.

Selon un mode de réalisation de l'invention, la page publique du compte d'expéditeur affiche, en relation avec l'information caractéristique du fichier, une information indicative de la dernière mise à jour ou du dernier téléchargement vers le serveur dudit fichier. Cela permet de savoir rapidement si le fichier en question est récent car un fichier ancien peut présenter moins d'intérêt qu'un fichier récent. Cette information indicative de la dernière mise à jour dudit fichier peut en outre être affichée, en relation avec ledit fichier, sur la page privée des comptes de destinataire ayant reçu l'autorisation de télécharger ce fichier.

Selon un mode de réalisation de l'invention, l'étape (b) comprend l'envoi, par le serveur au dispositif informatique expéditeur, d'informations concernant la politique de confidentialité du site internet et d'un moyen pour accepter ladite politique de confidentialité, la méthode s'arrêtant automatiquement si ladite politique de confidentialité n'est pas acceptée. Cela permet de s'assurer que tous les dispositifs informatiques expéditeurs ayant accès au site internet ont accepté la politique de confidentialité. La politique de confidentialité peut inclure que les informations contenues dans les fichiers téléchargés par le site internet ne peuvent servir qu'en interne chez le destinataire ou pour des rapports externes relatifs à des obligations réglementaires. Grâce à l'invention, il n'est donc plus nécessaire de signer des accords de confidentialité entre expéditeur et destinataire du fichier.

Selon un mode de réalisation de l'invention, l'étape (c) comprend l'envoi, par le serveur au dispositif informatique destinataire, d'informations concernant la politique de confidentialité du site internet et d'un moyen pour accepter ladite politique de confidentialité, la méthode s'arrêtant automatiquement si ladite politique de confidentialité n'est pas acceptée. Cela permet de s'assurer que tous les dispositifs informatiques destinataires ayant accès au site internet ont accepté la politique de confidentialité. La politique de confidentialité peut inclure que les informations contenues dans les fichiers téléchargés par le site internet ne peuvent servir qu'en interne chez le destinataire ou pour des rapports externes relatifs à des obligations réglementaires. Grâce à l'invention, il n'est donc plus nécessaire de signer des accords de confidentialité entre expéditeur et destinataire du fichier.

Selon un mode de réalisation de l'invention, l'information caractéristique du fichier est générée automatiquement par le serveur à partir du nom dudit fichier et/ou du contenu dudit fichier. Cela simplifie le traitement du fichier téléchargé par le serveur.

Selon un mode de réalisation de l'invention, la méthode comprend en outre les étapes suivantes:
(j) envoi au serveur, par le dispositif informatique expéditeur, d'un message d'arrêt d'autorisation d'accès d'un fichier à un dispositif informatique destinataire, ledit message permettant d'identifier le fichier et le dispositif informatique destinataire, et
(k) modification, par le serveur, d'une caractéristique dudit fichier et/ou dudit compte de destinataire pour retirer au dispositif informatique destinataire l'autorisation de télécharger ledit fichier à partir du serveur.

Le message d'arrêt d'autorisation d'accès peut être envoyé en cliquant sur une icône symbolisant le fichier, puis en choisissant le nom du compte de destinataire. Il est aussi possible que l'arrêt d'autorisation d'accès fasse stopper un accès pour un fichier donné à un dispositif informatique destinataire donné, pour un fichier donné à tous les dispositifs informatiques destinataires, pour tous les fichiers à un dispositif informatique destinataire donné ou pour tous les fichiers à tous les dispositifs informatiques destinataires. Cela permet d'améliorer la sécurité.

Selon un deuxième aspect, l'invention propose un programme informatique pour la mise en oeuvre d'une méthode selon un mode de réalisation de l'invention.

Selon un troisième aspect, l'invention propose un serveur informatique comprenant des moyens de communication électronique et agencé pour
- héberger un site internet prévu pour aider au transfert de fichiers informatiques,
- fournir une page pour une création, à l'aide d'un dispositif informatique expéditeur, d'un compte d'expéditeur sur ledit site internet,
- créer une page publique de compte d'expéditeur et une page privée de compte d'expéditeur sur ledit site internet sur base du compte d'expéditeur,
- fournir une page pour une création, à l'aide d'un dispositif informatique destinataire, d'un compte de destinataire sur ledit site internet,
- créer une page publique de compte de destinataire et une page privée de compte de destinataire sur ledit site internet sur base du compte de destinataire,
- recevoir un fichier envoyé par le dispositif informatique expéditeur,
- afficher, sur la page publique du compte d'expéditeur une information caractéristique dudit fichier,
- recevoir une requête de demande d'accès audit fichier du dispositif informatique destinataire,
- envoyer au dispositif informatique expéditeur une information concernant la requête de demande d'accès audit fichier permettant au dispositif informatique expéditeur d'identifier le fichier et le dispositif informatique destinataire,
- recevoir du dispositif informatique expéditeur un accord sur ladite requête,
- modifier une caractéristique dudit fichier et/ou dudit compte de destinataire pour autoriser le dispositif informatique destinataire à télécharger ledit fichier depuis le serveur.

Selon un mode de réalisation de l'invention, l'invention propose un système informatique de transfert de fichiers informatiques comprenant:
- des dispositifs informatiques expéditeurs,
- des dispositifs informatiques destinataires,
- un serveur selon l'invention connecté aux dispositifs informatiques expéditeurs et aux dispositifs informatiques destinataires,

les dispositifs informatiques expéditeurs étant agencés pour:
   - créer un compte d'expéditeur sur un site internet hébergé par le serveur,
   - envoyer un fichier au serveur,
   - recevoir du serveur une information concernant une requête de demande d'accès audit fichier,
   - envoyer au serveur un accord sur ladite requête,
les dispositifs informatiques destinataires étant agencés pour:
   - créer un compte de destinataire sur un site internet hébergé par le serveur,
   - envoyer une requête de demande d'accès à un fichier présent sur le serveur,
   - télécharger ledit fichier depuis le serveur.

La connexion entre le serveur et les dispositifs informatiques se fait préférentiellement par Internet.

Les avantages mentionnés pour la méthode s'appliquent mutatis mutandis aux autres aspects de l'invention.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 schématise un système informatique de transfert de fichiers informatiques selon un mode de réalisation possible de l'invention, et
- la figure 2 schématise des étapes d'une méthode de transfert de fichiers informatiques selon un mode de réalisation possible de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

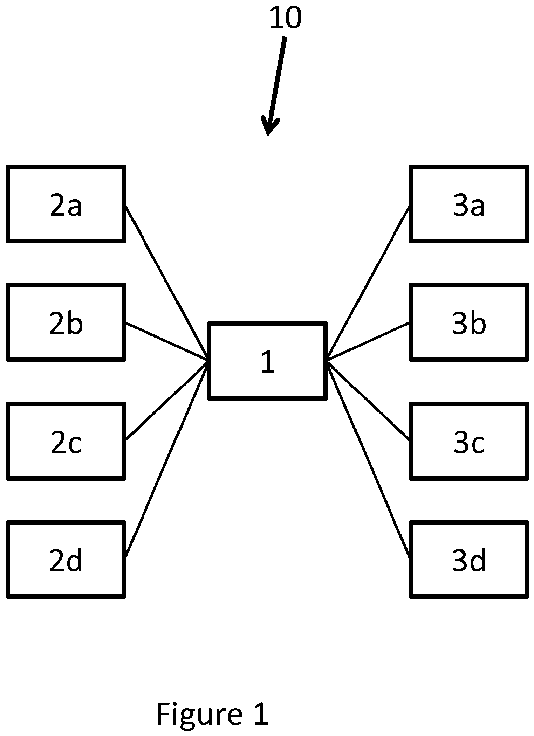

La figure 1 schématise un système informatique 10 de transfert de fichiers informatiques selon un mode de réalisation possible de l'invention. Le système informatique comprend des dispositifs informatiques expéditeurs 2a, 2b, 2c, 2d connectés à un serveur 1. Le système informatique comprend aussi des dispositifs informatiques destinataires 3a, 3b, 3c, 3d connectés au serveur 1. Les dispositifs informatiques expéditeurs 2 et destinataires 3 comprennent préférentiellement des interfaces utilisateurs comme un écran, une souris, et un clavier. La connexion entre les dispositifs informatiques expéditeurs 2 et destinataires 3 et le serveur 1 est préférentiellement une connexion au moins partiellement par Internet. Selon un mode de réalisation de l'invention, le système informatique 10 comprend entre dix et dix mille dispositifs informatiques expéditeurs 2. Selon un mode de réalisation de l'invention, le système informatique 10 comprend entre dix et dix mille dispositifs informatiques destinataires 3.

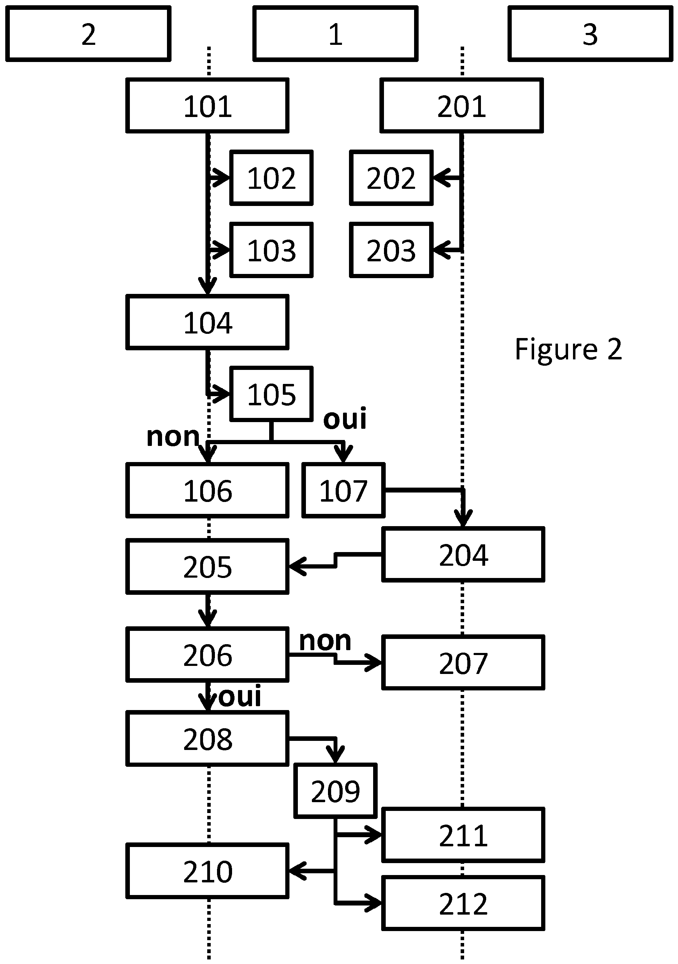

La figure 2 schématise des étapes d'une méthode de transfert de fichiers informatiques selon un mode de réalisation possible de l'invention. Certaines étapes de la méthode illustrée à la figure 2 sont optionnelles.

La méthode de transfert de fichiers informatiques selon l'invention comprend des étapes réalisées à l'aide du serveur 1, d'un des dispositifs informatiques expéditeurs 2 et d'un des dispositifs informatiques destinataires 3.

Les étapes réalisées à l'aide du dispositif informatique expéditeur 2 peuvent être réalisées par un utilisateur de ce dispositif, généralement un employé d'une première entité, ou par un logiciel fonctionnant sur ce dispositif. Les étapes réalisées à l'aide du dispositif informatique destinataire 3 peuvent être réalisées par un utilisateur de ce dispositif, généralement un employé d'une deuxième entité, ou par un logiciel fonctionnant sur ce dispositif.

Lors d'une étape non-illustrée, le serveur 1 met en ligne un site internet prévu pour aider au transfert de fichiers informatiques. Ce site internet est accessible par le dispositif informatique expéditeur 2 et par le dispositif informatique destinataire 3. Ce site internet permet la création d'au moins deux types de comptes : des comptes de type « expéditeur » et des comptes de type « destinataire ». Le site internet a préférentiellement une connexion sécurisée, par exemple de type https, afin de garantir la sécurité des fichiers téléchargés vers lui ou à partir de lui.

Selon un mode de réalisation de l'invention, le site interne propose des sous-comptes liés à un compte. Ainsi, plusieurs ordinateurs faisant partie du même dispositif informatique peuvent être connectés en même temps. En outre, un administrateur d'un compte peut voir quel ordinateur fait quelles actions parmi les différents ordinateurs d'un même dispositif informatique et attribuer des rôles à chaque sous-compte puis les gérer.

Selon un mode de réalisation possible de l'invention, un premier et un deuxième comptes peuvent établir une relation par le site internet. Pour que cette relation soit établie, comme dans d'autres réseaux sociaux connus comme Linkedln ou Facebook, il faut que le premier compte envoie une invitation au deuxième compte et que le deuxième compte accepte l'invitation.

Lors d'une étape 201, un compte de destinataire est créé à l'aide du dispositif informatique destinataire 3. Préférentiellement, la création de ce compte inclut la création d'un identifiant et d'un mot de passe et le remplissage d'un formulaire en ligne. De préférence, le serveur 1 attribue certaines caractéristiques au compte de destinataire, comme la capacité de télécharger des fichiers informatiques depuis le serveur 1 par le biais du site internet.

Préférentiellement, durant la création 201 du compte de destinataire, le serveur 1 envoie au dispositif informatique destinataire 3 des informations concernant les conditions générales et en particulier la politique de confidentialité du site internet et un moyen pour accepter ou refuser lesdites conditions générales. Les conditions générales peuvent comprendre une contractualisation avec le propriétaire du site internet. Par exemple, le site internet peut afficher une fenêtre avec les conditions générales du site internet et proposer un bouton "accepter les conditions générales" et un bouton "refuser les conditions générales". Si le bouton "accepter les conditions générales" n'est pas actionné, la création du compte de destinataire n'a pas lieu.

Suite à la création 201 du compte de destinataire, le serveur 1 crée 202 une page privée de compte de destinataire et crée 203 une page publique de compte de destinataire. Les pages publique et privée sont préférentiellement paramétrables. La page privée de compte de destinataire est accessible uniquement au dispositif informatique destinataire, c'est-à-dire au dispositif informatique s'étant identifié avec le compte de destinataire.

La page publique de compte de destinataire peut avoir plusieurs versions ayant des contenus différents.

Selon un mode de réalisation de l'invention, la page publique de compte de destinataire a deux versions. Une première version est accessible à tout dispositif informatique accédant au site internet et une deuxième version est accessible à tout dispositif informatique s'étant identifié sur le site internet.

Selon un autre mode de réalisation de l'invention, la page publique de compte de destinataire a trois versions. Une première version est accessible à tout dispositif informatique accédant au site internet, une deuxième version est accessible à tout dispositif informatique s'étant identifié sur le site internet et une troisième version n'est accessible qu'aux dispositifs informatiques dont le compte a établi une relation avec le compte de destinataire.

Lors d'une étape 101, un compte d'expéditeur est créé à l'aide du dispositif informatique expéditeur 2. Préférentiellement, la création de ce compte inclut la création d'un identifiant et d'un mot de passe et le remplissage d'un formulaire en ligne. De préférence, le serveur 1 attribue certaines caractéristiques au compte d'expéditeur, comme la capacité de télécharger des fichiers informatiques vers le serveur 1 par le biais du site internet.

Préférentiellement, durant la création 101 du compte d'expéditeur, le serveur 1 envoie au dispositif informatique expéditeur 2 des informations concernant les conditions générales et en particulier la politique de confidentialité du site internet et un moyen pour accepter ou refuser lesdites conditions générales. Les conditions générales peuvent comprendre une contractualisation avec le propriétaire du site internet. Par exemple, le site internet peut afficher un pop up avec les conditions générales du site internet et proposer un bouton "accepter les conditions générales" et un bouton "refuser les conditions générales". Si le bouton "accepter les conditions générales" n'est pas actionné, la création du compte d'expéditeur n'a pas lieu.

Suite à la création 101 du compte d'expéditeur, le serveur 1 crée 102 une page privée de compte d'expéditeur et crée 103 une page publique de compte d'expéditeur. La page privée de compte d'expéditeur est accessible uniquement au dispositif informatique expéditeur, c'est-à-dire au dispositif informatique s'étant identifié avec le compte d'expéditeur.

La page publique de compte d'expéditeur peut avoir plusieurs versions ayant des contenus différents.

Selon un mode de réalisation de l'invention, la page publique de compte d'expéditeur a deux versions. Une première version est accessible à tout dispositif informatique accédant au site internet et une deuxième version est accessible à tout dispositif informatique s'étant identifié sur le site internet.

Selon un autre mode de réalisation de l'invention, la page publique de compte d'expéditeur a trois versions. Une première version est accessible à tout dispositif informatique accédant au site internet, une deuxième version est accessible à tout dispositif informatique s'étant identifié sur le site internet et une troisième version n'est accessible qu'aux dispositifs informatiques dont le compte a établi une relation avec le compte d'expéditeur.

Lors d'une étape 104 de téléchargement de fichier informatique vers le serveur 1 (étape d'upload), le dispositif informatique expéditeur 2 envoie un fichier informatique vers le serveur 1, préférentiellement grâce au site internet. Par exemple, la page privée du compte d'expéditeur peut comprendre un bouton upload qui ouvre une fenêtre permettant de choisir un fichier présent sur le dispositif informatique expéditeur 2 afin de le transférer au serveur 1. Le fichier comprend une pluralité d'éléments, par exemple des données.

Selon un mode de réalisation de l'invention, le fichier comprend un tableau de données. Le fichier peut par exemple comprendre une image sous forme d'un tableau comprenant une pluralité d'éléments. En outre, si le site internet est prévu pour l'échange de fichiers répondant à une certaine norme ou à un certain critère, il est attendu qu'un élément présent à tel endroit du fichier ait tel format.

De préférence, le fichier est automatiquement vérifié 105 par le serveur 1. Cette vérification 105 peut porter sur le format du nom du fichier, par exemple pour vérifier que ce nom correspond à une norme ISO. Cette vérification 105 peut porter sur le format du fichier, par exemple l'extension du fichier. Cette vérification 105 peut aussi porter sur au moins un élément du fichier, c'est-à-dire sur le contenu du fichier. Par exemple, la vérification 105 peut vérifier si le fichier comprend un tableau de telle taille, si le fichier comprend un tableau dont les éléments ont tel format, si à tel endroit du fichier ou du tableau se trouve un élément de tel format.

Selon un mode de réalisation de l'invention, la vérification 105 comprend de vérifier si un élément donné d'un tableau compris dans le fichier a un format de date (code ISO 8601). Selon un mode de réalisation de l'invention, la vérification 105 comprend de vérifier si un élément donné d'un tableau compris dans le fichier a un format de code ISIN (code ISO 6166). Selon un mode de réalisation de l'invention, la vérification 105 comprend de vérifier si le fichier correspond à l'une des normes suivantes ou l'un des standards suivants: norme GT Solvabilité II, une des versions du standard TPT, le standard TPT v3.0 ou la norme EPT. La vérification 105 peut être qualifiée de vérification en ligne car elle a lieu sur le fichier alors que celui-ci est sur le serveur 1.

Selon un mode de réalisation de l'invention, si le fichier ne satisfait pas à la vérification 105, le fichier n'est pas mis en mémoire par le serveur 1 et un message est envoyé 106 par le serveur 1 au dispositif informatique expéditeur 2. Ce message comprend préférentiellement une description des problèmes détectés lors de la vérification 105, afin que le dispositif informatique expéditeur 2 puisse corriger ces problèmes dans le fichier télécharger 104 le fichier corriger.

Si le fichier satisfait à la vérification 105, il est stocké dans une mémoire du serveur 1. Certaines caractéristiques lui sont attribuées, liées par exemple au compte d'expéditeur qui l'a téléchargé. Ces caractéristiques peuvent être stockées sous forme d'une base de données. Les fichiers peuvent aussi être stockés sous forme d'une base de données. En outre, de préférence, le serveur 1 modifie la page privée du compte d'expéditeur pour qu'elle affiche les fichiers téléchargés vers le serveur 1 par le dispositif informatique expéditeur 2.

Si le fichier satisfait à la vérification 105, une information caractéristique de ce fichier est affichée 107 sur la page publique du compte d'expéditeur. L'information caractéristique peut comprendre des éléments présents dans le nom du fichier et/ou dans le contenu du fichier. L'information caractéristique peut être générée automatiquement par le serveur à partir du nom dudit fichier et/ou du contenu dudit fichier. L'information caractéristique peut comprendre un code ISIN.

Préférentiellement, la date de la dernière version du fichier ou du dernier upload du fichier est aussi affichée.

Si la page publique de compte d'expéditeur a une première version accessible à tout dispositif informatique accédant au site internet et une deuxième version accessible à tout dispositif informatique s'étant identifié sur le site internet, les informations caractéristiques des fichiers téléchargés vers le serveur 1 ne sont préférentiellement affichées que dans la deuxième version de la page publique de compte d'expéditeur.

Si la page publique de compte d'expéditeur a une première version accessible à tout dispositif informatique accédant au site internet, une deuxième version accessible à tout dispositif informatique s'étant identifié sur le site internet et une troisième version accessible uniquement aux dispositifs informatiques dont le compte a établi une relation avec le compte d'expéditeur, les informations caractéristiques des fichiers téléchargés vers le serveur 1 ne sont préférentiellement affichées que dans la troisième version de la page publique de compte d'expéditeur.

Ainsi, les premières entités peuvent proposer sur la page privée de leur compte d'expéditeur les fichiers informatiques qu'elles désirent partager. Préférentiellement, le site internet comprend un moyen de recherche, par exemple sous la forme d'une barre de recherche. Cela peut permettre de faire une recherche pour un fichier en entrant l'information caractéristique de celui-ci. Cela peut aussi permettre de faire une recherche sur un expéditeur ou un destinataire en entrant le nom de l'entité lui correspondant, et qui est liée au compte.

Lorsqu'une deuxième entité, utilisant le dispositif informatique destinataire 3, désire recevoir le fichier dont l'information caractéristique est affichée sur la page publique d'expéditeur, le dispositif informatique destinataire 3 envoie 204 au serveur 1, une requête de demande d'accès audit fichier. Cela peut par exemple se faire en cliquant sur une icône de la page publique de compte d'expéditeur affichant l'information caractéristique du fichier.

Le serveur 1 envoie 205 alors au dispositif informatique expéditeur 2 d'une information concernant la requête de demande d'accès audit fichier. Cette information est agencée pour permettre au dispositif informatique expéditeur 2 d'identifier le fichier et le dispositif informatique destinataire 3. Cela peut être un email indiquant l'information caractéristique du fichier et l'identifiant du compte de destinataire. Préférentiellement, cet email comprend un lien cliquable permettant à un utilisateur du dispositif informatique expéditeur 2 de donner ou refuser son accord.

Dans un mode de réalisation de l'invention, si l'accord est refusé sur le dispositif informatique expéditeur 2, le serveur 2 envoie 207 un message au dispositif informatique destinataire 3.

Si l'accord est donné sur le dispositif informatique expéditeur 2, le serveur 1 modifie 209 une caractéristique du fichier et/ou du compte de destinataire pour autoriser le dispositif informatique destinataire 3 à télécharger ledit fichier. Par exemple, l'identifiant du compte destinataire peut être inclus dans la base de données des caractéristiques du fichier comme un tiers étant autorisé à télécharger le fichier.

En outre, de préférence, le serveur 1 modifie 210 la page privée du compte d'expéditeur pour qu'elle affiche, en correspondance avec le fichier, le compte de destinataire comme ayant l'autorisation de télécharger ledit fichier depuis le serveur 1. Cet affichage est automatiquement mis à jour par le serveur 1 chaque fois que le serveur 1 modifie 209 une caractéristique du fichier et/ou du compte de destinataire pour autoriser le dispositif informatique destinataire 3 à télécharger ledit fichier.

Selon un mode de réalisation de l'invention, le serveur 1 modifie la page privée du compte d'expéditeur pour qu'elle affiche, en correspondance avec le fichier, nombre de comptes de destinataires qui ont l'autorisation de télécharger ledit fichier depuis le serveur 1. Cet affichage est automatiquement mis à jour par le serveur 1 chaque fois que le serveur 1 modifie 209 une caractéristique du fichier et/ou du compte de destinataire pour autoriser un dispositif informatique destinataire 3 à télécharger ledit fichier.

Selon un mode de réalisation de l'invention, le serveur 1 modifie 211 aussi la page privée du compte de destinataire pour qu'elle affiche le fichier comme étant téléchargeable depuis le serveur 1. Cet affichage est préférentiellement automatiquement mis à jour par le serveur 1 chaque fois que le serveur 1 modifie 209 une caractéristique d'un fichier et/ou du compte de destinataire pour autoriser le dispositif informatique destinataire 3 à télécharger un fichier. Cet affichage comporte préférentiellement l'information caractéristique du fichier, et potentiellement une information indicative de la dernière mise à jour ou du dernier téléchargement vers le serveur 1 dudit fichier.

Suite à la modification 209 sur le serveur 1, le dispositif informatique destinataire 3 peut télécharger 212 le fichier depuis le serveur 1 (étape de download).

Bien que la méthode décrite en référence à la figure 2 n'implique qu'un seul dispositif informatique expéditeur 2 et un seul dispositif informatique destinataire 3, elle peut être appliquée de nombreuses fois pour transférer de nombreux fichiers informatiques entre des dispositifs informatiques expéditeurs 2 et des dispositifs informatiques destinataires 3. De préférence, chaque dispositif informatique expéditeur ne réalise l'étape 101 de création de compte d'expéditeur qu'une fois. De préférence, chaque dispositif informatique destinataire ne réalise l'étape 201 de création de compte de destinataire qu'une fois. De préférence, les étapes 104, 105, 106 ou 104, 105, 107 sont réalisées chaque fois qu'un dispositif informatique expéditeur 2 télécharge un fichier vers le serveur 1. De préférence, les étapes 204, 205, 206, 208 et 209 sont réalisées l'une à la suite de l'autre chaque fois qu'un dispositif informatique destinataire désire l'accès à un fichier et que cet accès lui est accordé.

De préférence, lorsqu'une nouvelle version d'un fichier est téléchargée par le dispositif informatique expéditeur 2 vers le serveur 1, la version précédente s'affiche dans un historique de la page publique du compte d'expéditeur. Le serveur 1 peut générer automatiquement une notification de mise à jour aux dispositifs informatiques destinataires 3 ayant accès à ce fichier.

Selon un mode de réalisation de l'invention, il est possible aux dispositifs informatiques expéditeurs 2 et destinataires 3 d'entrer des adresses emails correspondant à des entités avec lesquelles ils désirent échanger des fichiers.

Selon un mode de réalisation de l'invention, le dispositif informatique destinataire 3 peut demander des fichiers qu'il désire télécharger, par exemple en entrant une liste sur le site internet. Le serveur 1 cherche s'il a déjà lesdits fichiers en mémoire. Pour chaque fichier déjà présent, le serveur 1 envoie un message au dispositif informatique expéditeur 3 l'ayant téléchargé. Si un fichier n'est pas présent, le serveur 1 l'indique au dispositif informatique destinataire 2. Celui-ci peut alors envoyer une invitation à l'entité possédant ledit fichier. Préférentiellement, si un fichier téléchargé vers le serveur 1 par un dispositif informatique expéditeur 2 a été auparavant demandé par un dispositif informatique destinataire 3, le serveur 1 envoie un message audit dispositif informatique destinataire 3 pour l'en avertir.

Selon un mode de réalisation de l'invention, une fois que l'accès à un fichier a été autorisé au dispositif informatique destinataire 2, l'accès reste activé. Selon un mode de réalisation de l'invention, le dispositif informatique expéditeur 2 peut stopper l'accès à un fichier donné à un dispositif informatique destinataire 3 donné, à un fichier donné à tous les dispositifs informatiques destinataires 3, à tous les fichiers à un dispositif informatique destinataire 3 donné ou à tous les fichiers à tous les dispositifs informatiques destinataires 3. Ceci permet de revenir sur une autorisation déjà donnée et donc d'augmenter la sécurité.

Pour stopper l'accès à un ou plusieurs fichier(s) à un ou plusieurs dispositif(s) informatique(s) destinataire(s) 3, le dispositif informatique expéditeur 2 envoie au serveur 1 un message d'arrêt d'autorisation d'accès. Ce message comprend des informations permettant d'identifier le(s) fichier(s) et le(s) dispositif(s) informatique(s) destinataire(s) 3 concernés.

Le serveur 1 modifie alors une caractéristique du (des) fichier(s) et/ou du (des) compte(s) de destinataire pour retirer au(x) dispositif(s) informatique(s) destinataire(s) 3 l'autorisation de télécharger le(s) fichier(s).

Selon un mode de réalisation de l'invention, le dispositif informatique destinataire 3 peut stopper son accès à un fichier. Cela peut être utile s'il soupçonne le fichier d'être infecté par un virus ou s'il veut enlever les fichiers qui ne l'intéressent plus de sa page privée.

Une application possible de l'invention est dans le domaine de la recherche scientifique où de nombreuses données expérimentales peuvent être mesurées par des premières entités utilisant chacune un dispositif informatique expéditeur, et ces données peuvent être utilisées par des deuxièmes entités utilisant chacune un dispositif informatique destinataire. Les données expérimentales sont préférentiellement ordonnées selon une norme sur laquelle les premières et deuxièmes entités se sont préalablement accordées.

Une autre application possible est dans le domaine de la finance. En effet, des sociétés de gestion disposent de fichiers qui répondent à la norme GT Solvabilité II et peuvent les proposer grâce à l'invention à des investisseurs institutionnels. L'information caractéristique du fichier reprend préférentiellement dans ce cas le code ISIN correspondant au fichier.

Une autre application possible concerne le transfert de fichiers images.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Méthode de transfert de fichiers informatiques comprenant les étapes suivantes:
(a) hébergement sur un serveur (1) d'un site internet prévu pour aider au transfert de fichiers informatiques,
(b) création (101), à l'aide d'un dispositif informatique expéditeur (2), d'un compte d'expéditeur sur ledit site internet, qui entraine une création (103) d'une page publique de compte d'expéditeur et une création (102) d'une page privée de compte d'expéditeur sur ledit site internet,
(c) création (201), à l'aide d'un dispositif informatique destinataire (3), d'un compte de destinataire sur ledit site internet, qui entraine une création (203) d'une page publique de compte de destinataire et une création (202) d'une page privée de compte de destinataire sur ledit site internet,
(d) téléchargement (104) d'un fichier vers le serveur (1) à partir du dispositif informatique expéditeur (2),
(e) affichage (107), sur la page publique du compte d'expéditeur d'une information caractéristique dudit fichier,
(f) envoi (204) au serveur (1), par le dispositif informatique destinataire (3), d'une requête de demande d'accès audit fichier,
(g) envoi (205) au dispositif informatique expéditeur (2), par le serveur (1), d'une information concernant la requête de demande d'accès audit fichier permettant au dispositif informatique expéditeur (2) d'identifier le fichier et le dispositif informatique destinataire (3),
(h) envoi (208) au serveur (1), par le dispositif informatique expéditeur (2), d'un accord sur ladite requête, et
(i) modification (209), par le serveur (1), d'une caractéristique dudit fichier et/ou dudit compte de destinataire pour autoriser le dispositif informatique destinataire (3) à télécharger ledit fichier à partir du serveur (1).

2. Méthode de transfert de fichiers informatiques selon la revendication précédente, **caractérisée en ce que** le téléchargement (104) d'un fichier vers le serveur (1) est suivi d'une vérification (105) de format du fichier.

3. Méthode de transfert de fichiers informatiques selon l'une quelconque des revendications précédentes, **caractérisée en ce que** le téléchargement (104) d'un fichier vers le serveur (1) est suivi d'une vérification de format d'au moins un élément du fichier.

4. Méthode de transfert de fichiers informatiques selon l'une quelconque des revendications précédentes, **caractérisée en ce que** la page privée du compte d'expéditeur indique les fichiers téléchargés vers le serveur (1) par le dispositif informatique expéditeur (2).

5. Méthode de transfert de fichiers informatiques selon la revendication précédente, **caractérisée en ce que** la page privée du compte d'expéditeur indique, en relation avec les fichiers, les comptes de destinataires qui ont l'autorisation de télécharger lesdits fichiers depuis le serveur (1), et **en ce que** le serveur (1) met automatiquement cette information à jour suite à l'étape (i).

6. Méthode de transfert de fichiers informatiques selon la revendication 4 ou 5, **caractérisée en ce que** la page privée du compte d'expéditeur indique, en relation avec les fichiers, le nombre de comptes de destinataires qui ont l'autorisation de télécharger lesdits fichiers depuis le serveur (1), et **en ce que** le serveur (1) met automatiquement cette information à jour suite à l'étape (i).

7. Méthode de transfert de fichiers informatiques selon l'une quelconque des revendications précédentes, **caractérisée en ce que** la page privée du compte de destinataire indique les fichiers que ledit compte de destinataire a l'autorisation de télécharger depuis le serveur (1).

8. Méthode de transfert de fichiers informatiques selon l'une quelconque des revendications précédentes, **caractérisée en ce que** la page publique du compte d'expéditeur affiche, en relation avec l'information caractéristique du fichier, une information indicative de la dernière mise à jour ou du dernier téléchargement vers le serveur (1) dudit fichier.

9. Méthode de transfert de fichiers informatiques selon l'une quelconque des revendications précédentes, **caractérisée en ce que** l'étape (b) comprend l'envoi, par le serveur (1) au dispositif informatique expéditeur (2), d'informations concernant la politique de confidentialité du site internet et d'un moyen pour accepter ladite politique de confidentialité, la méthode s'arrêtant automatiquement si ladite politique de confidentialité n'est pas acceptée.

10. Méthode de transfert de fichiers informatiques selon l'une quelconque des revendications précédentes, **caractérisée en ce que** l'étape (c) comprend l'envoi, par le serveur (1) au dispositif informatique destinataire (3), d'informations concernant la politique de confidentialité du site internet et d'un moyen pour accepter ladite politique de confidentialité, la méthode s'arrêtant automatiquement si ladite politique de confidentialité n'est pas acceptée.

11. Méthode de transfert de fichiers informatiques selon l'une quelconque des revendications précédentes, **caractérisée en ce que** l'information caractéristique du fichier est générée automatiquement par le serveur (1) à partir du nom dudit fichier et/ou du contenu dudit fichier.

12. Méthode de transfert de fichiers informatiques selon l'une quelconque des revendications précédentes, **caractérisée en ce qu'**elle comprend en outre les étapes suivantes:
(j) envoi au serveur (1), par le dispositif informatique expéditeur (2), d'un message d'arrêt d'autorisation d'accès d'un fichier à un dispositif informatique destinataire (3), ledit message permettant d'identifier ledit fichier et ledit dispositif informatique destinataire (3), et
(k) modification, par le serveur (1), d'une caractéristique dudit fichier et/ou dudit compte de destinataire pour retirer au dispositif informatique destinataire (3) l'autorisation de télécharger ledit fichier à partir du serveur (1).

13. Programme informatique pour la mise en oeuvre d'une méthode selon l'une quelconque des revendications précédentes.

14. Serveur informatique (1) comprenant des moyens de communication électronique et agencé pour
• héberger un site internet prévu pour aider au transfert de fichiers informatiques,
• fournir une page pour une création, à l'aide d'un dispositif informatique expéditeur (2), d'un compte d'expéditeur sur ledit site internet, créer une page publique de compte d'expéditeur et une page privée de compte d'expéditeur sur ledit site internet sur base du compte d'expéditeur,
• fournir une page pour une création, à l'aide d'un dispositif informatique destinataire (3), d'un compte de destinataire sur ledit site internet,
• créer une page publique de compte de destinataire et une page privée de compte de destinataire sur ledit site internet sur base du compte de destinataire,
• recevoir un fichier envoyé par le dispositif informatique expéditeur (2),
• afficher, sur la page publique du compte d'expéditeur une information caractéristique dudit fichier,
• recevoir du dispositif informatique destinataire (3) une requête de demande d'accès audit fichier,
• envoyer au dispositif informatique expéditeur (2) une information concernant la requête de demande d'accès audit fichier permettant au dispositif informatique expéditeur (2) d'identifier le fichier et le dispositif informatique destinataire (3),
• recevoir du dispositif informatique expéditeur (2) un accord sur ladite requête,
• modifier une caractéristique dudit fichier et/ou dudit compte de destinataire pour autoriser le dispositif informatique destinataire (3) à télécharger ledit fichier depuis le serveur (1).

15. Système informatique (10) de transfert de fichiers informatiques comprenant:
• des dispositifs informatiques expéditeurs (2a, 2b, 2c, 2d),
• des dispositifs informatiques destinataires (3a, 3b, 3c, 3d),
• un serveur (1) selon la revendication précédente connecté aux dispositifs informatiques expéditeurs (2a, 2b, 2c, 2d) et aux dispositifs informatiques destinataires (3a, 3b, 3c, 3d),
les dispositifs informatiques expéditeurs (2a, 2b, 2c, 2d) étant agencés pour:
- créer un compte d'expéditeur sur un site internet hébergé par le serveur (1),
- envoyer un fichier au serveur (1),
- recevoir du serveur (1) une information concernant une requête de demande d'accès audit fichier,
- envoyer au serveur (1) un accord sur ladite requête,
les dispositifs informatiques destinataires (3a, 3b, 3c, 3d) étant agencés pour:
- créer un compte de destinataire sur un site internet hébergé par le serveur (1),
- envoyer une requête de demande d'accès à un fichier présent sur le serveur (1),
- télécharger ledit fichier depuis le serveur (1).

## Patentansprüche

1. Verfahren zum Übertragen von Computerdateien, das die folgenden Schritte umfasst:
(a) Unterbringung, auf einem Server (1), einer Internetseite, die dazu vorgesehen ist, die Übertragung von Computerdateien zu unterstützen,
(b) Erzeugung (101), mithilfe einer Absender-Computervorrichtung (2), eines Absenderkontos auf der Internetseite, das eine Erzeugung (103) einer öffentlichen Absenderkontoseite und eine Erzeugung (102) einer privaten Absenderkontoseite auf der Internetseite bewirkt,
(c) Erzeugung (201), mithilfe einer Empfänger-Computervorrichtung (3), eines Empfängerkontos auf der Internetseite, das eine Erzeugung (203) einer öffentlichen Empfängerkontoseite und eine Erzeugung (202) einer privaten Empfängerkontoseite auf der Internetseite bewirkt,
(d) Hochladen (104) einer Datei auf den Server (1) ausgehend von der Absender-Computervorrichtung (2),
(e) Anzeigen (107), auf der öffentlichen Seite des Absenderkontos, einer charakteristischen Information der Datei,
(f) Senden (204), an den Server (1) durch die Empfänger-Computervorrichtung (3), einer Zugriffsanfrage auf die Datei,
(g) Senden (205), an die Absender-Computervorrichtung (2) durch den Server (1), einer Information bezüglich der Zugriffsanfrage auf die Datei, die der Absender-Computervorrichtung (2) ermöglicht, die Datei und die Empfänger-Computervorrichtung (3) zu identifizieren,
(h) Senden (208), an den Server (1) durch die Absender-Computervorrichtung (2), einer Übereinkunft über die Anfrage, und
(i) Modifikation (209), durch den Server (1), eines Merkmals der Datei und/oder des Empfängerkontos, um die Empfänger-Computervorrichtung (3) zu berechtigen, die Datei ausgehend vom Server (1) herunterzuladen.

2. Verfahren zum Übertragen von Computerdateien nach dem vorstehenden Anspruch, **dadurch gekennzeichnet, dass** dem Hochladen (104) einer Datei auf den Server (1) eine Überprüfung (105) des Dateiformats folgt.

3. Verfahren zum Übertragen von Computerdateien nach einem der vorstehenden Ansprüche, **dadurch gekennzeichnet, dass** dem Hochladen (104) einer Datei auf den Server (1) eine Überprüfung des Formats mindestens eines Dateielements folgt.

4. Verfahren zum Übertragen von Computerdateien nach einem der vorstehenden Ansprüche, **dadurch gekennzeichnet, dass** die private Seite des Absenderkontos die durch die Absender-Computervorrichtung (2) auf den Server hochgeladenen Dateien (1) angibt.

5. Verfahren zum Übertragen von Computerdateien nach dem vorstehenden Anspruch, **dadurch gekennzeichnet, dass** die private Seite des Absenderkontos im Zusammenhang mit den Dateien die Empfängerkonten angibt, die die Berechtigung haben, die Dateien ausgehend vom Server (1) herunterzuladen, und dadurch, dass der Server (1) diese Information im Anschluss an Schritt (i) automatisch aktualisiert.

6. Verfahren zum Übertragen von Computerdateien nach Anspruch 4 oder 5, **dadurch gekennzeichnet, dass** die private Seite des Absenderkontos im Zusammenhang mit den Dateien die Anzahl von Empfängerkonten angibt, die die Berechtigung haben, die Dateien ausgehend vom Server (1) herunterzuladen, und dadurch, dass der Server (1) diese Information im Anschluss an Schritt (i) automatisch aktualisiert.

7. Verfahren zum Übertragen von Computerdateien nach einem der vorstehenden Ansprüche, **dadurch gekennzeichnet, dass** die private Seite des Empfängerkontos die Dateien angibt, für die das Empfängerkonto die Berechtigung zum Herunterladen ausgehend vom Server (1) hat.

8. Verfahren zum Übertragen von Computerdateien nach einem der vorstehenden Ansprüche, **dadurch gekennzeichnet, dass** die öffentliche Seite des Absenderkontos im Zusammenhang mit der charakteristischen Information der Datei eine Information anzeigt, die die letzte Aktualisierung oder das letzte Hochladen auf den Server (1) der Datei angibt.

9. Verfahren zum Übertragen von Computerdateien nach einem der vorstehenden Ansprüche, **dadurch gekennzeichnet, dass** der Schritt (b) das Senden, durch den Server (1) an die Absender-Computervorrichtung (2), von Informationen bezüglich der Datenschutzbestimmungen der Internetseite und eines Mittels zum Akzeptieren der Datenschutzbestimmungen umfasst, wobei das Verfahren automatisch stoppt, wenn die Datenschutzbestimmungen nicht akzeptiert werden.

10. Verfahren zum Übertragen von Computerdateien nach einem der vorstehenden Ansprüche, **dadurch gekennzeichnet, dass** der Schritt (c) das Senden, durch den Server (1) an die Empfänger-Computervorrichtung (3), von Informationen bezüglich der Datenschutzbestimmungen der Internetseite und eines Mittels zum Akzeptieren der Datenschutzbestimmungen umfasst, wobei das Verfahren automatisch stoppt, wenn die Datenschutzbestimmungen nicht akzeptiert werden.

11. Verfahren zum Übertragen von Computerdateien nach einem der vorstehenden Ansprüche, **dadurch gekennzeichnet, dass** die charakteristische Information der Datei ausgehend vom Namen der Datei und/oder vom Inhalt der Datei automatisch durch den Server (1) erzeugt wird.

12. Verfahren zum Übertragen von Computerdateien nach einem der vorstehenden Ansprüche, **dadurch gekennzeichnet, dass** es weiter die folgenden Schritte umfasst:
(j) Senden, an den Server (1) durch die Absender-Computervorrichtung (2), einer Nachricht über einen Zugriffsberechtigungsstopp auf eine Datei an einer Empfänger-Computervorrichtung (3), wobei die Nachricht ermöglicht, die Datei und die Empfänger-Computervorrichtung (3) zu identifizieren, und
(k) Modifikation, durch den Server (1), eines Merkmals der Datei und/oder des Empfängerkontos, um der Empfänger-Computervorrichtung (3) die Berechtigung, die Datei ausgehend vom Server (1) herunterzuladen, zu entziehen.

13. Computerprogramm zum Einsatz eines Verfahrens nach einem der vorstehenden Ansprüche.

14. Computerserver (1), der Mittel zur elektronischen Kommunikation umfasst und eingerichtet ist zum:
- Unterbringen einer Internetseite, die dazu vorgesehen ist, die Übertragung von Computerdateien zu unterstützen,
- Bereitstellen einer Seite für eine Erzeugung, mithilfe einer Absender-Computervorrichtung (2), eines Absenderkontos auf der Internetseite, Erzeugen einer öffentlichen Absenderkontoseite und einer privaten Absenderkontoseite auf der Internetseite auf der Grundlage des Absenderkontos,
- Bereitstellen einer Seite für eine Erzeugung, mithilfe einer Empfänger-Computervorrichtung (3), eines Empfängerkontos auf der Internetseite,
- Erzeugen einer öffentlichen Empfängerkontoseite und einer privaten Empfängerkontoseite auf der Internetseite auf der Grundlage des Empfängerkontos,
- Empfangen einer durch die Absender-Computervorrichtung (2) gesendeten Datei,
- Anzeigen, auf der öffentlichen Seite des Absenderkontos, einer charakteristischen Information der Datei,
- Empfangen, von der Empfänger-Computervorrichtung (3), einer Zugriffsanfrage auf die Datei,
- Senden, an die Absender-Computervorrichtung (2), einer Information bezüglich der Zugriffsanfrage auf die Datei, die der Absender-Computervorrichtung (2) ermöglicht, die Datei und die Empfänger-Computervorrichtung (3) zu identifizieren,
- Empfangen, von der Absender-Computervorrichtung (2), einer Übereinkunft über die Anfrage,
- Modifizieren eines Merkmals der Datei und/oder des Empfängerkontos, um die Empfänger-Computervorrichtung (3) zu berechtigen, die Datei ausgehend vom Server (1) herunterzuladen.

15. Computersystem (10) zur Übertragung von Computerdateien, umfassend:
- Absender-Computervorrichtungen (2a, 2b, 2c, 2d),
- Empfänger-Computervorrichtungen (3a, 3b, 3c, 3d),
- einen Server (1) nach dem vorstehenden Anspruch, der mit den Absender-Computervorrichtungen (2a, 2b, 2c, 2d) und mit den Empfänger-Computervorrichtungen (3a, 3b, 3c, 3d) verbunden ist,
wobei die Absender-Computervorrichtungen (2a, 2b, 2c, 2d) eingerichtet sind zum:
- Erzeugen eines Absenderkontos auf einer vom Server (1) untergebrachten Internetseite,
- Senden einer Datei an den Server (1),
- Empfangen, vom Server (1), einer Information bezüglich einer Zugriffsanfrage auf die Datei,
- Senden, an den Server (1), einer Übereinkunft über die Anfrage,
wobei die Empfänger-Computervorrichtungen (3a, 3b, 3c, 3d) eingerichtet sind zum:
- Erzeugen eines Empfängerkontos auf einer vom Server (1) untergebrachten Internetseite,
- Senden einer Zugriffsanfrage auf eine auf dem Server (1) vorhandene Datei,
- Herunterladen der Datei ausgehend vom Server (1).

## Claims

1. Method for transferring computer files comprising the following steps:
(a) hosting on a server (1) of a website provided to assist with transferring computer files,
(b) creating (101), using a sender computer device (2), a sender account on said website, which leads to a creation (103) of a sender account public page and a creation (102) of a sender account private page on said website,
(c) creating (201), using a recipient computer device (3), a recipient account on said website, which leads to a creation (203) of a recipient account public page and a creation (202) of a recipient account private page on said website,
(d) downloading (104) a file to the server (1) from the sender computer device (2),
(e) displaying (107), on the public page of the sender account of information characteristic of said file,
(f) sending (204) to the server (1), by the recipient computer device (3), of a request requesting access to said file,
(g) sending (205) to the sender computer device (2), by the server (1), of information relating to the request requesting access to said file, enabling the sender computer device (2) to identify the file and the recipient computer device (3),
(h) sending (208) to the server (1), by the sender computer device (2), of an agreement on said request, and
(i) modifying (209), by the server (1), of a characteristic of said file and/or of said recipient account to authorise the recipient computer device (3) to download said file from the server (1).

2. Method for transferring computer files according to the preceding claim, **characterised in that** the downloading (104) of a file to the server (1) is followed by a format verification (105) of the file.

3. Method for transferring computer files according to any one of the preceding claims, **characterised in that** the downloading (104) of a file to the server (1) is followed by a format verification of at least one element of the file.

4. Method for transferring computer files according to any one of the preceding claims, **characterised in that** the private page of the sender account indicates the files downloaded to the server (1) by the sender computer device (2).

5. Method for transferring computer files according to the preceding claim, **characterised in that** the private page of the sender account indicates, in relation to the files, the recipient accounts which have the authorisation to download said files from the server (1), and **in that** the server (1) automatically updates this information following step (i).

6. Method for transferring computer files according to claim 4 or 5, **characterised in** the the private page of the sender account indicates, in relation to the files, the number of recipient accounts which have the authorisation to download said files from the server (1), and **in that** the server (1) automatically updates this information following step (i).

7. Method for transferring computer files according to any one of the preceding claims, **characterised in that** the private page of the recipient account indicates the files that said recipient account has the authorisation to download from the server (1).

8. Method for transferring computer files according to any one of the preceding claims, **characterised in that** the public page of the sender account displays, in relation to the information characteristic of the file, information indicative of the latest update or of the latest downloading to the server (1) of said file.

9. Method for transferring computer files according to any one of the preceding claims, **characterised in that** the step (b) comprises the sending, by the server (1) to the sender computer device (2), of information relating to the confidentiality policy of the website and of a means for accepting said confidentiality policy, the method stopping automatically if said confidentiality policy is not accepted.

10. Method for transferring computer files according to any one of the preceding claims, **characterised in that** the step (c) comprises the sending, by the server (1) to the recipient computer device (3), of information relating to the confidentiality policy of the website and of a means for accepting said confidentiality policy, the method stopping automatically if said confidentiality policy is not accepted.

11. Method for transferring computer files according to any one of the preceding claims, **characterised in that** the information characteristic of the file is generated automatically by the server (1) from the name of said file and/or of the content of said file.

12. Method for transferring files according to any one of the preceding claims, **characterised in that** it further comprises the following steps:
(j) sending to the server (1), by the sender computer device (2), of a message for stopping authorisation to access a file to a recipient computer device (3), said message making it possible to identify said file and said recipient computer device (3), and
(k) modifying, by the server (1), of a characteristic of said file and/or of said recipient account to remove at the recipient computer device (3), authorisation to download said file from the server (1).

13. Computer program for implementing a method according to any one of the preceding claims.

14. Computer server (1) comprising electronic communication means and arranged to
- host a website provided to assist with transferring computer files,
- provide a page for a creation, using a sender computer device (2), of a sender account on said website, creating a sender account public page and a sender account private page on said website based on the sender account,
- provide a page for a creation, using a recipient computer device (3), of a recipient account on said website,
- create a recipient account public page and a recipient account private page on said website based on the recipient account,
- receive a file sent by the sender computer device (2),
- display, on the public page of the sender account, information characteristic of said file,
- receive from the recipient computer device (3), a request requesting access to said file,
- send to the sender computer device (2) information relating to the request requesting access to said file, enabling the sender computer device (2) to identify the file and the recipient computer device (3),
- receive from the sender computer device (2), an agreement on said request,
- modify a characteristic of said file and/or of said recipient account to authorise the recipient computer device (3) to download said file from the server (1).

15. Information system (10) for transferring computer files comprising:
- sender computer devices (2a, 2b, 2c, 2d),
- recipient computer devices (3a, 3b, 3c, 3d),
- a server (1) according the preceding claim connected to the sender computer devices (2a, 2b, 2c, 2d) and to the recipient computer devices (3a, 3b, 3c, 3d),
the sender computer devices (2a, 2b, 2c, 2d) being arranged to:
- create a sender account on a website hosted by the server (1),
- send a file to the server (1),
- receive from the server (1), information relating to a request requesting access to said file,
- send to the server (1), an agreement on said request,
the recipient computer devices (3a, 3b, 3c, 3d) being arranged to:
- create a recipient account on a website hosted by the server (1),
- send a request requesting access to a file present on the server (1),
- download said file from the server (1).
